# EUROPEAN PATENT APPLICATION

(11) **EP 4 682 337 A1**
(43) Date of publication of application: **21.01.2026**
(21) Application number: 25179288.3
(22) Date of filing: 28.05.2025
(51) Int. Cl.: E05B 83/24, E05B 85/26, E05B 15/04

(54) **DOUBLE-PULL LOCK WITH SAFETY CATCH FOR A VEHICLE HOOD**

(30) Priority: 17.07.2024 IT 202400016609
(71) Applicant: CEBI ITALY S.p.A., 12025 Dronero (CN) (IT)
(72) Inventor: CAPOGROSSO, Francesco, 60027 OSIMO (AN) (IT)
(74) Representative: Cutropia, Gianluigi

(57) **Abstract**

A lock (100) for a vehicle hood comprises a catch (2), a pawl (3) and a safety catch (4) hinged in a box (A); the safety catch has an actuation arm (44) that abuts against an actuation pin (34) of the pawl; a first spring (8) pushes the pawl (3) and a second spring (9) pushes the safety catch; the second resultant force (E2) exerted by the second spring (9) on the actuation arm (44) of the safety catch is lower than the first resultant force (E1) exerted by the first spring (8) on the actuation pin (34) of the pawl.

## Description

The present invention relates to a double-pull lock with safety catch for a vehicle hood.

Recently, there has been a growing demand from car manufacturers for double-security locks for vehicle hoods, in which the lock is actuated for a first time by the user to obtain a partial opening, in which the hood is lifted by a few centimeters, but is still retained by the lock; successively, the lock is actuated for a second time by the user to open and lift the hood completely. These types of locks are commonly referred to as double-pull locks.

WO2021/121883A1 discloses a vehicle double-pull lock comprising a catch suitable for fastening a striker in total closing position and in partial closing position. A pawl (3) locks the catch (2) in total closing position and in partial closing position. When the lock is closed, the pawl is actuated for the first time by the user, releasing the catch that goes from the total closing position to the partial closing position. Then the pawl is actuated for a second time by the user, releasing the catch from the partial closing position to open the lock completely.

WO2022084257A1 discloses a vehicle double-pull lock provided with safety catch. In such a case, a catch is suitable for fastening a striker only in total closing position, whereas the safety catch is suitable for fastening the striker in partial closing position. When the lock is closed, the pawl is activated for the first time by the user, releasing the catch in such a way that the lock remains in partial closing position, in which the safety catch retains the striker. Then the pawl is actuated for the second time by the user, releasing the safety catch to open the lock completely.

In any case, the pawl of a double-pull lock is constantly stressed by a spring towards its locking position of the catch. Therefore, double-pull locks are impaired by the fact that, due to the repeated actuation of the pawl, the spring of the pawl may get damaged or may be ejected from its seat, rendering the pawl inoperable. In such an instance, the lock can be opened unintentionally because the pawl no longer locks the catch and the safety catch, if present. Evidently, this is a major safety issue, especially if the lock opens while the vehicle is in motion.

The purpose of this invention is to eliminate the drawbacks of the prior art by providing a double-pull lock with safety catch for a vehicle hood that is suitable for keeping the lock closed only when the spring of the pawl is not working.

Another purpose is to provide such a double-pull lock that is safe, versatile, reliable, compact, and simple to manufacture and operate.

These purposes are achieved in accordance with the invention with the features of independent claim 1.

Advantageous embodiments of the invention appear from the dependent claims.

The lock according to the invention is defined in claim 1.

Further features of the invention will become clearer from the detailed description below, referring to purely exemplary and therefore non-limiting embodiments illustrated in the accompanying drawings, wherein:
Fig. 1 is a perspective view of the lock according to the invention;
Fig. 1A is an enlarged detail of Fig. 1 illustrating the spring of the pawl and the spring of the safety catch;
Fig. 2 is an exploded perspective illustrating the various parts of the lock according to the invention;
Fig. 3 is a perspective view illustrating a first plate and a second plate of the lock according to the invention;
Fig. 4 is a perspective view illustrating a catch and a pawl of the lock according to the invention;
Fig. 5 is a perspective view illustrating a safety catch of the lock according to the invention;
Fig. 6 is a view of the lock according to the invention in total closing position;
Fig. 6A is the same view as Fig. 6, illustrating only the catch and the pawl;
Fig. 7 is a view illustrating the catch and the pawl when the pawl is pulled for the first time;
Fig. 8 is a view of the lock according to the invention in intermediate partial closing position, after pulling the pawl for a first time;
Fig. 8A is a view as in Fig. 8, illustrating only the catch and the pawl;
Fig. 9 is a view illustrating the catch and the pawl when the pawl is pulled for the second time;
Fig. 10 is a view of the lock according to the invention in opening position, after pulling the pawl for the second time;
Fig. 10A is the same view as Fig. 10, illustrating only the catch and the pawl;
Fig. 11 is a view of the lock according to the invention wherein the spring of the pawl has been omitted to simulate a situation in which the spring of the pawl does not work; and
Fig. 12 is a perspective view illustrating a second embodiment of the lock according to the invention.

With the aid of the Figures, a lock according to the invention, which is comprehensively indicated with reference numeral 100, is described.

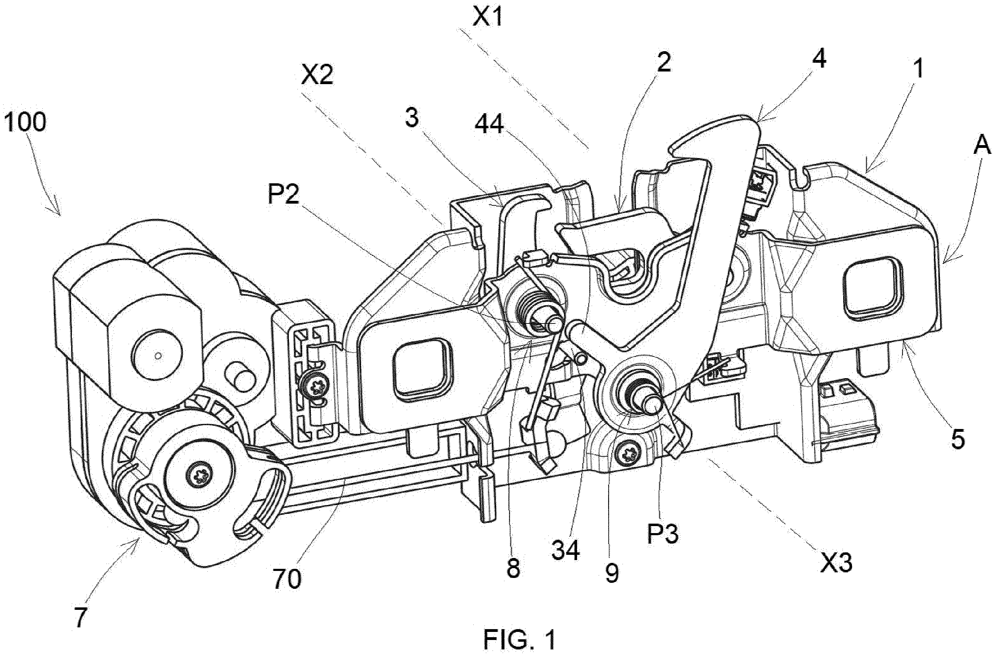

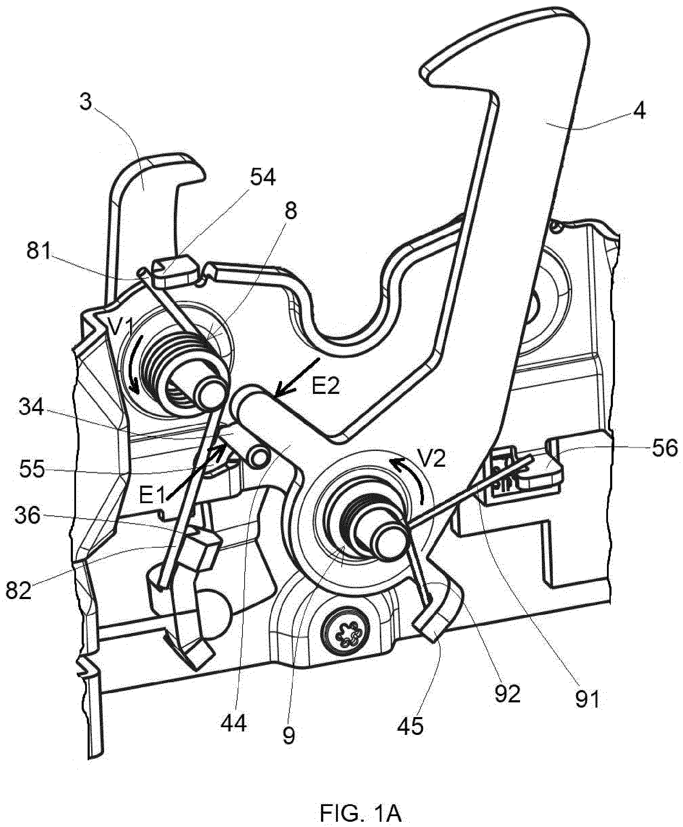

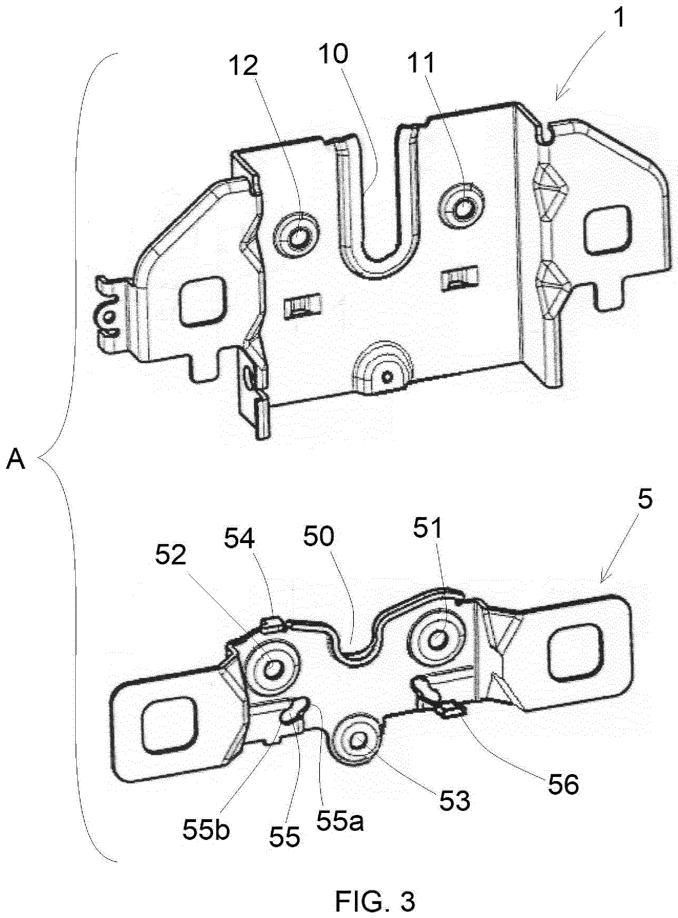

With reference to Figs. 1, 2, and 3, the lock (100) comprises a box (A) whereto a catch (2), a pawl (3), and a safety catch (4) are pivoted. As shown in Fig. 3, the box (A) comprises a first plate (1) and a second plate (5).

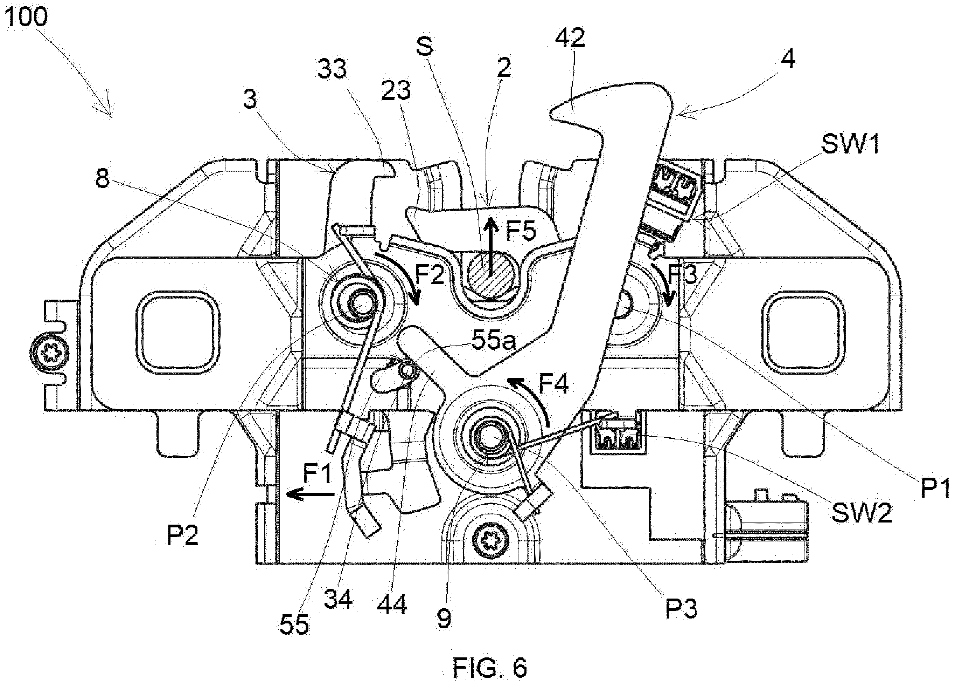

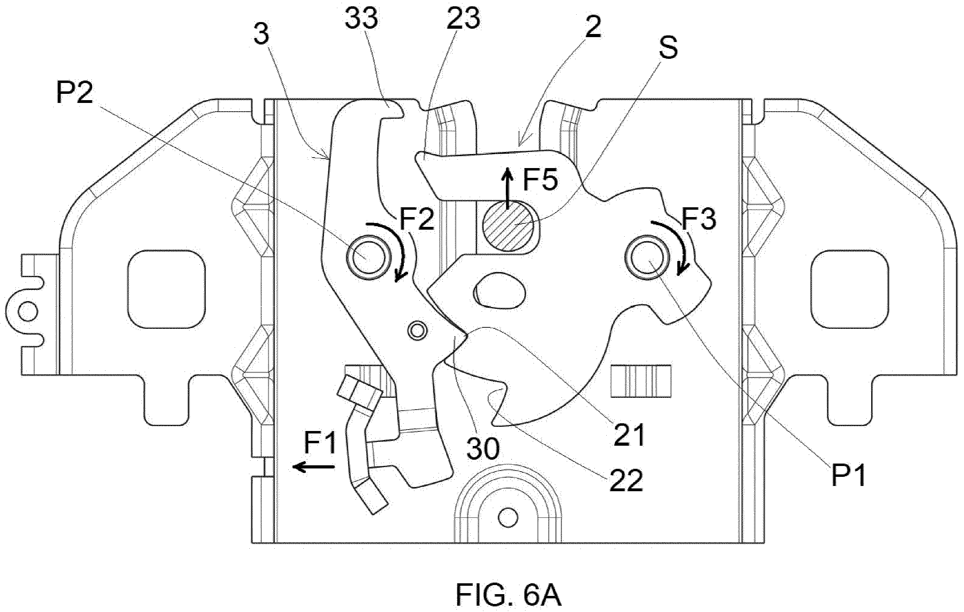

The first plate (1) comprises a U-shaped slot (10) suitable for accommodating a striker (S) (Fig. 6). The second plate (5) comprises a U-shaped slot (50) suitable for accommodating the striker (S). Therefore, the first plate (1) and the second plate (5) are parallel to each other, and the respective slots (10, 50) are aligned.

The lock (100) can be integral with the vehicle body and the striker (S) can be integral with the hood lid, or vice versa.

The first plate (1) has a first hole (11) and a second hole (12) arranged on either side of the slot (10). A first pivoting pin (P1) and a second pivoting pin (P2) are arranged respectively in the first hole (11) and in the second hole (12) of the first plate to pivot the catch (2) about a first pivoting axis (X1) and the pawl (3) about a second pivoting axis (X2).

The second plate (5) has a first hole (51) and a second hole (52) arranged on either side of the slot (50). In this way, the first pivoting pin (P1) and the second pivoting pin (P2) are arranged respectively in the first hole (51) and in the second hole (52) of the second plate (5). Moreover, the second plate (5) has a third hole (53) wherein a third pivoting pin (P3) is provided to pivot the safety catch (4) about a third pivoting axis (X3).

With reference to Fig. 1, the catch (2) and the pawl (3) are arranged between the first plate (1) and the second plate (5); conversely, the safety catch (4) is arranged in front of the second plate (5). The three pivoting axes (X1, X2, X3) are parallel to each other and perpendicular to the first plate (1) and to the second plate (5).

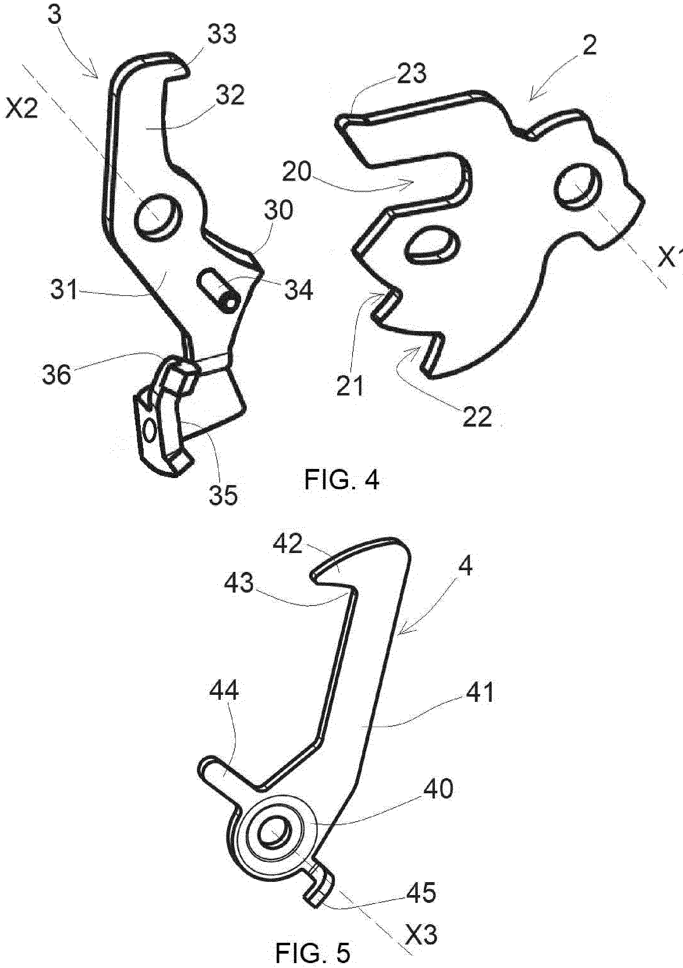

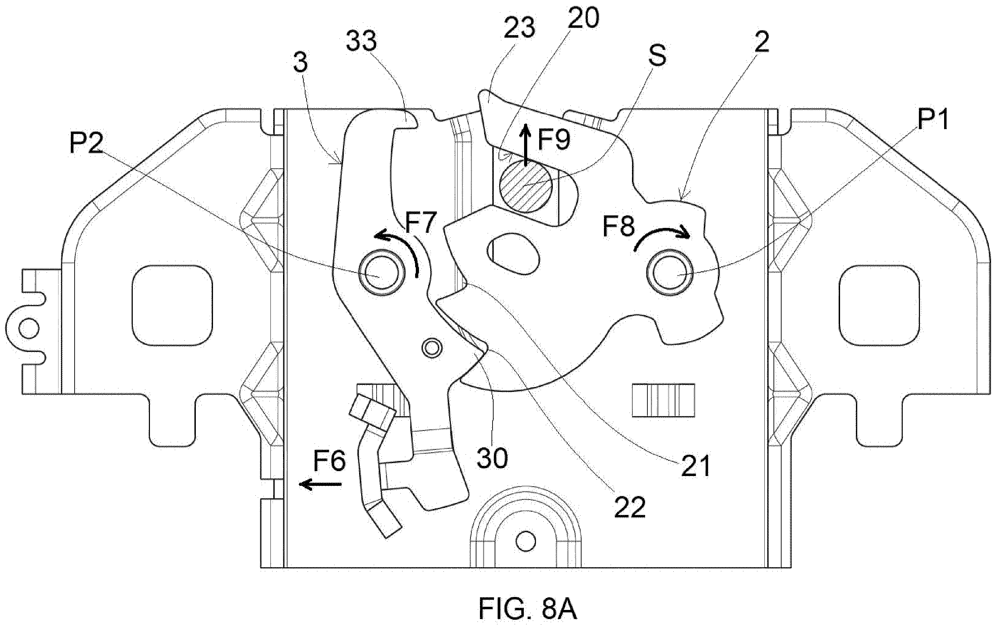

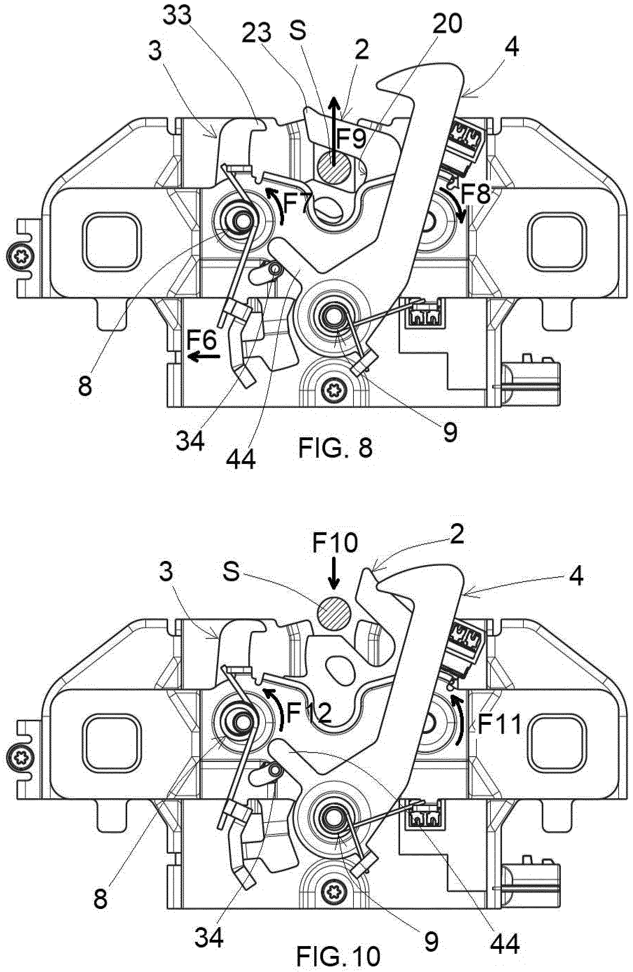

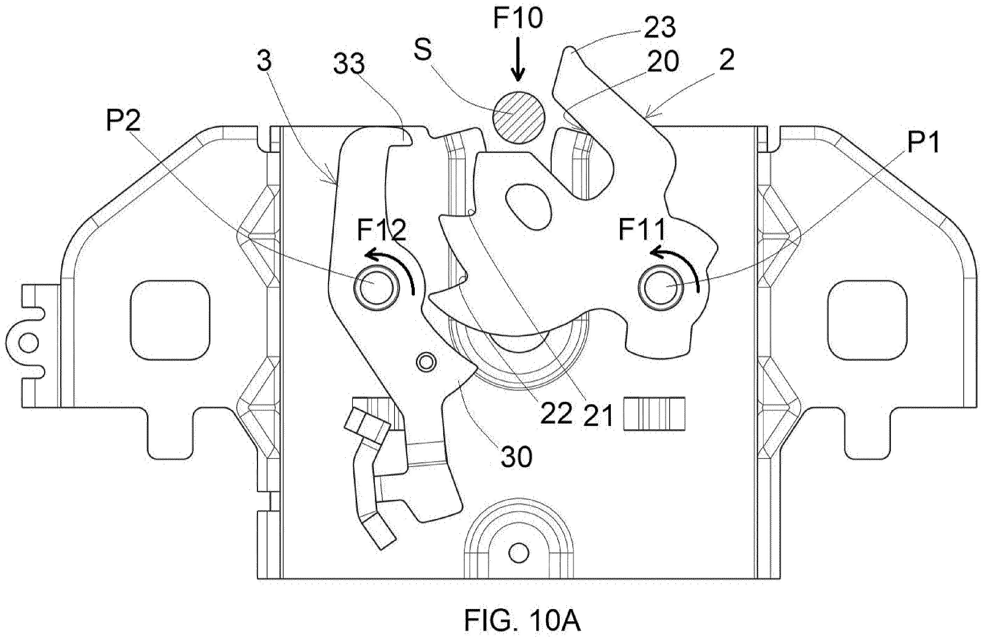

With reference to Fig. 4, the catch (2) comprises a U-shaped fastening seat (20) suitable for fastening the striker (S) when it is located in the slot (10) of the first plate in order to close the lock, as shown in Figs. 6 and 6A. The catch (2) can rotate about the first pivoting axis (X1) to assume three positions:
- a total closing position (Figs. 6 and 6A), wherein the catch (2) locks the striker (S),
- a partial closing position (Figs. 8 and 8A), wherein the striker (S) is raised with respect to the total closing position, but it is still retained by the catch (2), and
- an opening position (Figs. 10 and 10A), wherein the catch (2) releases the striker (S).

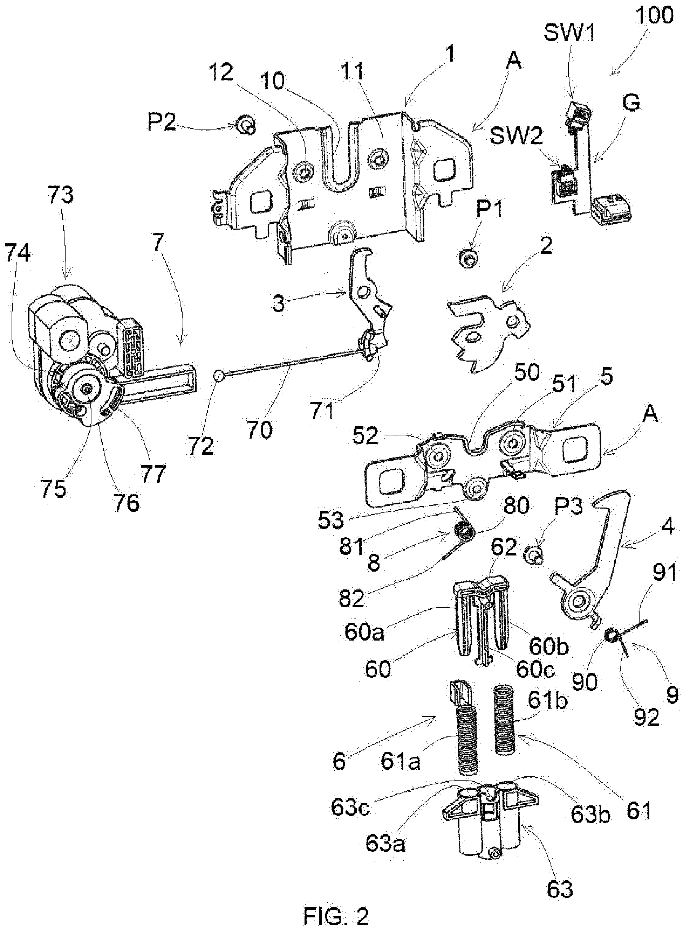

With reference to Fig. 2, ejection means (6) operate the catch (2) or the striker (S) to push the catch (2) to its opening position and thus eject the striker (S) from the lock.

In the example of Fig. 2, the ejection means comprise a pusher (60) suitable for pushing the striker (S) and spring means (61) that push the pusher (60). The spring means (61) are arranged between a guide (63) fixed to the box of the lock and the pusher (60).

The guide (63) comprises two side sleeves (63a, 63b) and one central sleeve (63c).

The spring means (61) comprise two helical springs (61a, 62b) that work in compression. The helical springs (62a, 62b) are arranged in the two side sleeves (63a, 63b) of the guide.

The pusher (60) comprises two side rods (60a, 6b) and one central rod (60c) connected to a crossbar (62) suitable for pushing the striker. The side rods (60a, 6b) and the central rod (60c) of the pusher are slidingly guided respectively in the two side sleeves (63a, 63b) and in the central sleeve (63c) of the guide.

Going back to Fig. 4, the catch (2) has a first stop seat (21) located below the fastening seat (20) and a second stop seat (22) located below the first stop seat (21). The stop seats (21, 22) are shaped like a V-shaped notch formed in one edge of the catch. Furthermore, the catch (2) has a stop tooth (23) that projects above the fastening seat (20).

The pawl (3) comprises a stop tooth (30) suitable for being engaged in the first stop seat (21) or in the second stop seat (22) of the catch. When the stop tooth (30) of the pawl is engaged in the first stop seat (21) of the catch, the catch is in total closing position. When the stop tooth (30) of the pawl is engaged in the second stop seat (22) of the catch, the catch is in partial closing position.

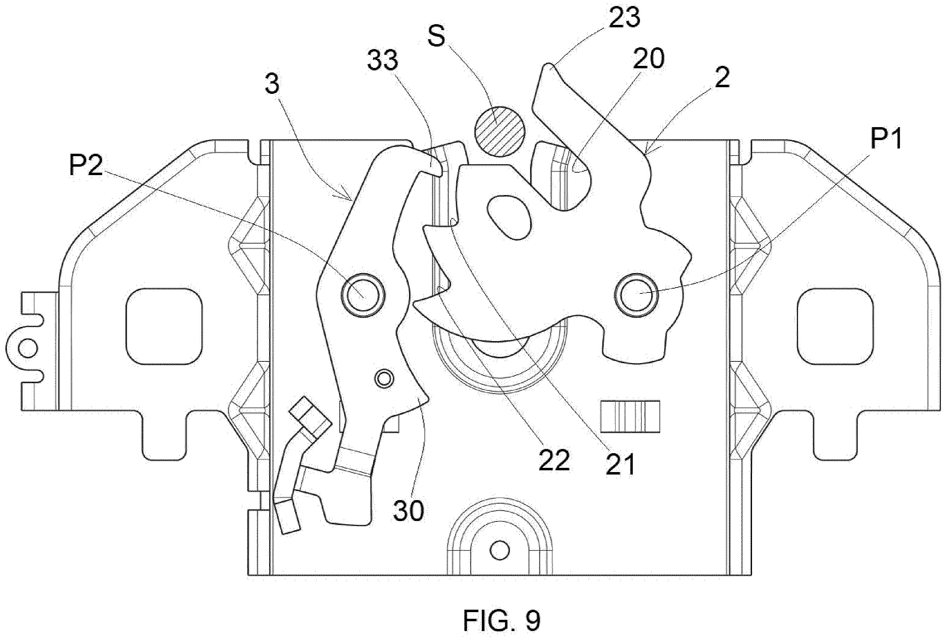

The pawl (3) can rotate about the second pivoting axis (X2) to assume three positions:
- a first locking position, wherein the stop tooth (30) of the pawl is engaged in the first stop seat (21) of the catch, and the pawl locks the catch in total closing position (Fig. 6A),
- a second locking position, wherein the stop tooth (30) of the pawl is engaged in the second stop seat (22) of the catch, and the pawl locks the catch in partial closing position (Fig. 8A), and
- an unlocking position (Figs. 9 and 10A), wherein the stop tooth (30) of the pawl is not engaged in either the first stop seat (21) or in the second stop seat (22) of the catch, thus releasing the catch.

With reference to Figs. 1 and 2, the pawl (3) is stressed to its locking positions by a first spring (8) connected to the pawl and to the box (A). In the example of Figs. 1 and 2, the first spring (8) of the pawl is a torsion spring. In such a case, the first spring (8) has a helical portion (80) arranged around the second pivoting pin (P2), a first end (81) attached to the box (A) and a second end (82) attached to the pawl (3).

Returning to Fig. 4, the pawl (3) has a first arm (31) and a second arm (32) extending in opposite directions from the second pivoting axis (X2). The second arm (32) of the pawl is provided with a stop tooth (33) that projects towards the catch to cooperate with the stop tooth (23) of the catch.

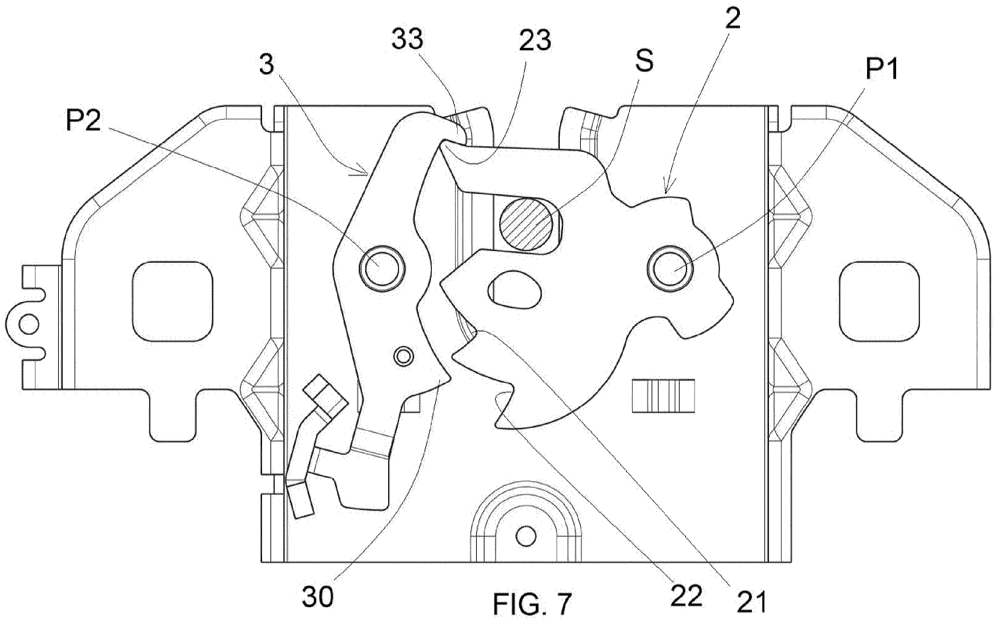

Therefore, when the pawl (3) is pulled for the first time, the pawl (3) may assume an intermediate locking position (Fig. 7) wherein the stop tooth (33) of the pawl engages the stop tooth (23) of the catch.

The stop tooth (30) facing the catch is provided on the first arm (31) of the pawl.

An actuation pin (34) with axis parallel to the second pivoting axis (X2) of the pawl is provided on the first arm (31) of the pawl.

With reference to Fig. 3, the second plate (5) has a curved slot (55) wherein the actuation pin (34) of the pawl is movably inserted. In such a way, the actuation pin (34) of the pawl projects beyond the second plate (5) to cooperate with the safety catch (4).

The slot (55) of the second plate has a first end-stop (55a) and a second end-stop (55b) that define the travel of the actuation pin (34) and therefore the rotational travel of the pawl (3) about the second pivoting axis (X2). Obviously, the travel of the pawl (3) can be defined by the contact of other parts of the pawl (3) with parts of the box (A) and parts of the catch (2).

Returning to Fig. 4, a flange (35) is arranged on the first arm (31) of the pawl. In the flange (35) there is a first seat (36) suitable for accommodating the second end (82) of the spring of the pawl. Instead, the first end (81) of the spring of the pawl is arranged in a projection (54) (Fig. 3) that projects from the second plate (5).

As shown in Fig. 1, the first spring (8) of the pawl is disposed frontally with respect to the second plate (5).

With reference to Figs. 1 and 2, the pawl (3) is actuated by actuation means (7) suitable for moving the pawl (3) towards the release position. The actuation means (7) are connected to the pawl (3) by means of a Bowden cable (70). The Bowden cable (70) has a first ball (71) engaged in a second seat (37) of the flange (35) of the pawl.

The actuation means (7) may be an actuator (73) or a manual actuation lever. If the actuation means comprise an actuator, said actuator (73) comprises an electric motor (74) with a rotor (75) connected to a support (76) having a seat (77) that accommodates a second ball (72) of the Bowden cable (70).

With reference to Fig. 5, the safety catch (4) has a central portion (40) pivoted to the third pin (P3) about the third pivoting axis (X3). A main arm (41) projects from the central portion (40) of the safety catch. The main arm terminates with a tooth (42) so as to define an L-shaped seat (43) suitable for retaining the striker (S).

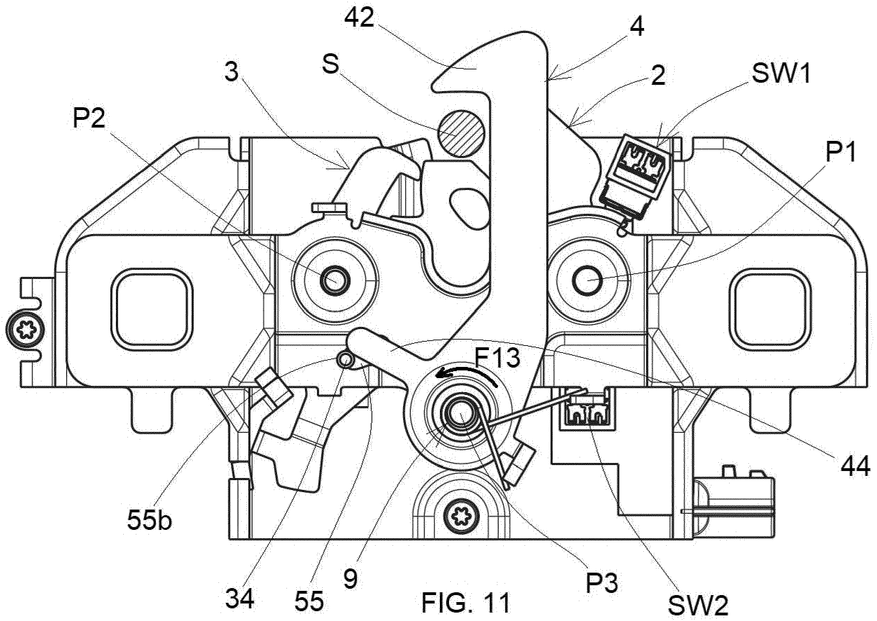

The safety catch (4) can rotate around the third pivoting axis (X3) to assume two positions:
- a non-operating position (Figs. 6, 8 and 10), wherein the tooth (42) of the safety catch is distal from the slot (10) of the first plate and therefore cannot engage the striker (S); and
- an operating position (Fig. 11), wherein the tooth (42) of the safety catch is above the slot (10) of the first plate and therefore engages and retains the striker (S), preventing the hood from opening.

Returning to Fig. 5, the safety catch (4) has an actuation arm (44) that projects radially from the central portion (40). The actuation arm (44) of the safety catch faces the actuation pin (34) of the pawl. An angle of approximately 70°-110° is provided between the main arm (41) and the actuation arm (44).

As shown in Fig. 1, the actuation arm (44) of the safety catch abuts against the actuation pin (34) of the pawl in such a way as to retain the safety catch (4) in non-operating position.

The safety catch (4) is stressed toward the operating position by a second spring (9) connected to the safety catch (4) and to the box (A). The second spring (9) of the safety catch may be a torsion spring. In such a case, the second spring (9) of the safety catch has a helical portion (90) arranged around the third pivoting pin (P3), a first end (91) attached to the box (A) and a second end (92) attached to the safety catch (4).

With reference to Fig. 1A, the first spring (8) rotates the pawl (3) in the direction V1, exerting a first resultant force (E1) on the actuation pin (34) of the pawl. The second spring (9) rotates the safety catch (4) in the direction V2, exerting a second resultant force (E2) on the actuation arm (44) of the safety catch.

The second resultant force (E2) is opposite to the first resultant force (E1). The second resultant force (E2) must be lower than the first resultant force (E1) so that the thrust of the pawl (3) exerted by the first spring (8) prevails over the thrust of the catch (2) exerted by the second spring (9).

In view of the above, when the first spring (8) is operating, the actuation pin (34) of the pawl pushes the actuation arm (44) of the catch and the catch is in non-operating position. Conversely, when the first spring (8) is not operating, the actuation arm (44) of the catch pushes the actuation pin (34) of the pawl and the catch is in operating position.

With reference to Fig. 5, the safety catch (4) has an L-shaped projection (45) that projects anteriorly from the central portion (40).

With reference to Fig. 3, the second plate (5) has a projection (56) that projects anteriorly.

With reference to Fig. 1A, the first end (91) of the second spring is attached to the projection (56) of the second plate and the second end (92) of the second spring is attached to the projection (45) of the safety catch.

With reference to Fig. 2, the lock (100) comprises a sensor unit (G) suitable for detecting the position of the catch (2). The sensor unit (G) is suitable for detecting when the catch (2) is not in total closing position, i.e. when the lock is open or in intermediate closing position.

For redundancy purposes, the sensor unit (G) comprises two microswitches (SW1, SW2) that are activated when the catch (2) rotates in the opening direction, before the catch (2) reaches the partial closing position.

The operation of the lock (100) is described below.

With reference to Figs. 6 and 6A, the catch (2) is in total closing position, wherein it engages and retains the striker (S) in place.

The pawl (3) is in the first locking position, wherein the stop tooth (30) of the pawl is engaged in the first stop seat (21) of the catch to lock the catch (2) in total closing position.

The safety catch (4) is in non-operating position since the actuation arm (44) of the safety catch (4) abuts against the actuation pin (34) of the pawl and the first spring (8) prevails over the second spring (9). In such a case, the actuation pin (34) of the pawl abuts against the first end-stop (55a) of the slot of the second plate.

The sensor unit (G) does not indicate that the catch (2) is in opening position.

To open the lock, the pawl (3) is actuated for the first time (first pull) in the direction of arrow F1, against the action of the first spring (8). As a result, the pawl (3) rotates clockwise about the second pivoting axis (X2), in the direction of the arrow F2, and the stop tooth (30) of the pawl disengages from the first stop seat (21) of the catch.

Due to the action of the ejection means (6), the catch (2) can rotate about the first pivoting axis (X1) clockwise in the direction of the arrow F3.

As shown in Fig. 7, during the rotation of the catch, the stop tooth (23) of the catch abuts against the stop tooth (33) of the pawl, preventing the catch (2) from reaching its opening position.

During the rotation of the pawl (3) towards its unlocking position, the safety catch (4) is moved in the direction of arrow F4 due to the action of the second spring (9). However, even if the tooth (42) of the safety catch is positioned above the striker (S), the safety catch does not interfere with the striker (S) that is still retained by the catch (2).

Furthermore, during the rotation of the catch, the striker (S) pushed by the ejection means (6) is moved in the direction of arrow F5 and is lifted with respect to its initial total closing position, as shown in Fig. 7.

With reference to Fig. 7, when the actuation force of the pawl (3) is interrupted, the first spring (8) pushes the pawl towards its second locking position, wherein the stop tooth (30) of the pawl is engaged in the second stop seat (22) of the catch. Therefore the catch (2) remains locked in its partial closing position, as shown in Figs. 8 and 8A. In such a case, the safety catch (4) returns to its non-operating position because the actuation pin (34) of the pawl pushes the actuation arm (44) of the safety catch.

In such an intermediate closing position, the striker (S) is still retained inside the fastening seat (20) of the catch. Furthermore, the safety catch (4) is still in non-operating position because the actuation arm (44) of the safety catch (4) abuts against the actuation pin (34) of the pawl.

With reference to Figs. 8 and 8A, when the lock is in intermediate closing position, the user actuates the pawl (3) for a second time (second pull) in the direction of arrow F6, against the action of the first spring (8). As a result, the pawl (3) rotates clockwise about the second pivoting axis (X2) in the direction of arrow F7, and the stop tooth (30) of the pawl disengages from the second stop seat (22) of the catch.

Due to the action of the ejection means (6), the catch (2) can rotate about the first pivoting axis (X1) clockwise in the direction of arrow F8. In such a case, during the rotation of the catch, the stop tooth (23) of the catch does not interfere with the stop tooth (33) of the pawl, and the catch (2) can reach its opening position, so that the striker (S) can move in the direction of arrow F9, leaving the fastening seat (20) of the catch, as shown in Fig. 9.

When the actuation force of the pawl (3) is interrupted, the first spring (8) pushes the pawl into its initial position (shown in Figs. 10 and 10a), wherein the actuation pin (34) of the pawl is in forward position, abutting against the first end-stop (55a) of the slot of the second plate (5).

In such an open position of the lock, the safety catch (4) is still in non-operating position because the actuation arm (44) of the safety catch (4) abuts against the actuation pin (34) of the pawl.

It should be noted that during the normal operation of the lock, the safety catch (4) never interferes with the striker (S) and therefore never retains the striker, which is always retained only by the catch (2).

The sensor unit (G) indicates that the lock is not completely closed, and therefore in a potentially dangerous state, so that the vehicle should not be driven.

Starting from the open position of the lock, shown in Figs. 10 and 10a, in order to close the lock, the striker (S) is pushed in the direction of arrow F10 against the action of the ejection means (6), then the catch rotates counterclockwise in the direction of arrow F11 and pushes the pawl (3) that rotates counterclockwise in the direction of arrow F12, until the stop tooth (30) of the pawl is engaged first in the second stop seat (22) and then in the first stop seat (21) of the catch, bringing the lock back to the total closing position shown in Fig. 6A.

Fig. 11 illustrates the case in which the first spring (8) of the pawl is not present. Obviously, such a situation occurs when the spring of the latch is not working because it is broken or ejected from its retaining seats.

In such a case, the second spring (9) of the catch has no opposing spring and therefore pushes the safety catch (4) that rotates in the direction of arrow F13, moving to its operating position, wherein the tooth (42) of the safety catch retains the striker (S), preventing the hood from opening.

The actuation arm (44) of the safety catch pushes the actuation pin (34) of the pawl that abuts against the second end-stop (55b) of the slot of the second plate.

The sensor unit (G) detects that the catch (2) is in total opening position, i.e., the lock is open. However, the user cannot lift the hood because the safety catch (4) retains the striker (S) in place. Such a situation indicates that the first spring (8) of the pawl is not working. Therefore, in such a situation, the motor vehicle must be taken to a workshop to repair the lock.

It should be noted that, when the lock is open and the hood is lifted, and the striker (S) is above the safety catch (4), if the first spring (8) of the pawl is released/broken, the safety catch (4) allows the striker (S) to be re-engaged in the intermediate closing position, as shown in Figs. 8 and 8A. In fact, the safety catch (4) can rotate clockwise, it being only pushed by the weight of the hood that generates a vertical force on the striker (S). Then the safety catch (4) returns to its position to retain the striker (S) in place by means of the thrust of the second spring (9) of the safety catch.

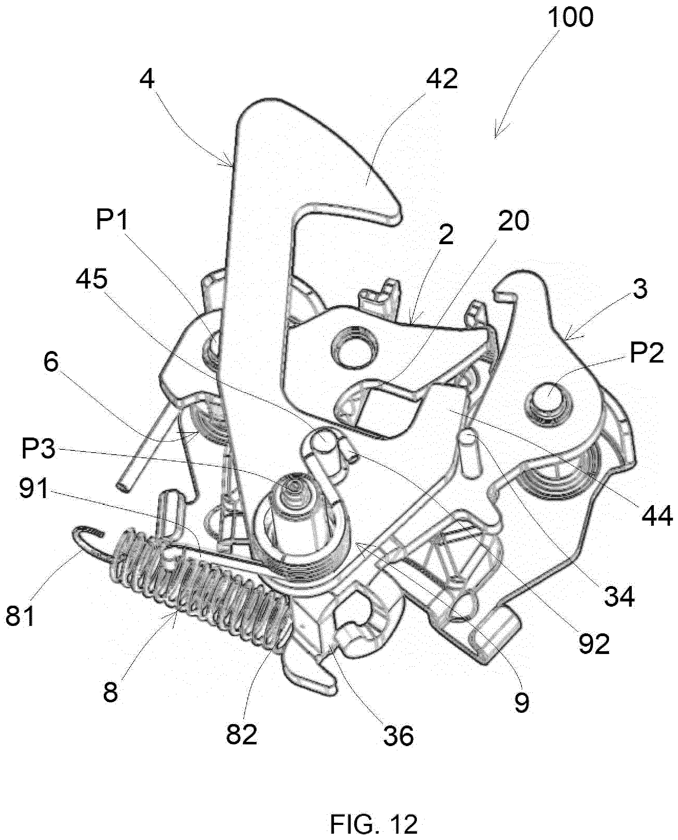

Fig. 12 illustrates a second embodiment of the vehicle lock (100) wherein elements identical or corresponding to those already described are indicated with the same reference numerals.

In this case, the first spring (8) of the pawl is a tension spring and not a torsion spring. In any case, the first spring (8) has a first end (81) attached to the box and a second end (82) attached to a seat (36) of the pawl.

The second spring (9) of the safety catch is a torsion spring arranged around the pivoting pin (P3) of the safety catch and has a first end (91) attached to the box and a second end (92) attached to a projection (45) of the safety catch.

The ejection means (6) comprise a torsion spring arranged around the pivoting pin (P1) of the catch (2) and having a first end attached to the box and a second end attached to a seat of the catch.

## Claims

1. Vehicle lock (100) comprising:
- a box (A) having a slot (10) suitable for accommodating a striker (S) integral with a body part or lid of the vehicle,
- a catch (2) having a fastening seat (20) suitable for fastening the striker (S) when it is in the slot (10) of the box; said catch (2) being pivoted to the box (A) about a first pivoting axis (X1) in order to assume three positions: a total closing position, wherein the catch (2) locks the striker (S), a partial closing position, wherein the striker (S) is raised with respect to the total closing position, but is retained by the catch (2), and an opening position, wherein the catch (2) releases the striker (S),
- ejection means (6) operating the catch (2) or the striker (S) to push the catch (2) into its opening position, thus allowing the ejection of the striker (S) from the lock,
- a pawl (3) pivoted to said box (A) about a second pivoting axis (X2) in order to assume three positions: a first locking position, wherein the pawl locks the catch in total closing position, a second locking position, wherein the pawl locks the catch in partial closing position, and an unlocking position, wherein the pawl does not lock the catch; said pawl having an actuation pin (34) projecting from the pawl;
- a first spring (8) that pushes the pawl (3) into its locking positions, in such a way to exert a first resultant force (E1) on the actuation pin (34) of the pawl,
- actuation means (7) connected to the pawl (3) to actuate the pawl toward its unlocking position,
- a safety catch (4) having a tooth (42) suitable for locking said striker (S) and an actuation arm (44) cooperating with the actuation pin (34) of said pawl; said safety catch (4) being pivoted to said box (A) about a third pivoting axis (X3) in order to assume two positions: a non-operating position, wherein the tooth (42) of the safety catch is distal from the slot (10) of the box and does not lock the striker (S), and an operating position, wherein the tooth (42) of the safety catch is above said slot (10) of the box and locks the striker (S), and
- a second spring (9) that pushes said safety catch (4) into said operating position; wherein the second spring (9) exerts a second resultant force (E2) on the actuation arm (44) of the safety catch that is opposite to the first resultant force (E1), so that the actuation arm (44) of the safety catch abuts against the actuation pin (34) of the pawl;
wherein the second resultant force (E2) exerted by the second spring (9) on the actuation arm (44) of the safety catch is lower than the first resultant force (E1) exerted by the first spring (8) on the actuation pin (34) of the pawl, so that when the first spring (8) is operating, the actuation pin (34) of the pawl pushes the actuation arm (44) of the safety catch and the safety catch is in non-operating position, and when the first spring (8) is not operating, the actuation arm (44) of the safety catch pushes the actuation pin (34) of the pawl and the safety catch is in operating position.

2. The lock (100) according to claim 1, wherein said box (A) comprises a first plate (1) whereto the catch (2) and the pawl (3) are pivoted, and a second plate (5) whereto the safety catch (4) is pivoted.

3. The lock (100) according to claim 2, wherein said second plate (5) has a curved slot (55) crossed by said actuation pin (34) of the pawl.

4. The lock (100) according to claim 3, wherein said slot (55) of the second plate (5) has a first end-stop (55a) and a second end-stop (55b) that define the travel of the actuation pin (34) and thus the rotational travel of the pawl (3) about the second pivoting axis (X2).

5. The lock (100) according to any of the preceding claims, wherein said first spring (8) is a torsion spring having a central portion (80) disposed around a pivoting pin (P2) of the pawl, a first end (81) constrained to the box and a second end (82) constrained to a seat (36) of the pawl.

6. The lock (100) according to any of the preceding claims, wherein said second spring (9) is a torsion spring having a central portion (90) disposed around a pivoting pin (P3) of the safety catch, a first end (91) constrained to the box and a second end (92) constrained to a projection (45) of the safety catch.

7. The lock (100) according to any of the preceding claims, wherein the catch (2) has a first stop seat (21) and a second stop seat (22) and said pawl (3) has a stop tooth (30) suitable for being engaged in the first stop seat (21) or in the second stop seat (22) of the catch; so that when the stop tooth (30) of the pawl is engaged in the first stop seat (21) of the catch, the catch is in total closing position, and when the stop tooth (30) of the pawl is engaged in the second stop seat (22) of the catch, the catch is in partial closing position.

8. The lock (100) according to any of the preceding claims, comprising a sensor unit (G) suitable for detecting when the catch (2) is not in total closing position.

9. The lock (100) according to any of the preceding claims, wherein said actuation means (7) comprise an actuator (73) comprising an electric motor (74) having a rotor (75) connected to a support (76) connected to a Bowden cable (70) attached to the pawl (3).

10. The lock (100) according to any of the preceding claims, wherein said ejection means comprise a pusher (60) suitable for pushing the striker (S), spring means (61) disposed between a guide (63) attached to the box of the lock and the pusher (60); wherein the pusher (60) is slidably mounted and guided in the guide (63).
